# FASCICULE DE BREVET EUROPEEN

(11) **EP 0 566 436 B1**
(45) Date de publication et mention de la délivrance du brevet: **08.07.1998**
(21) Numéro de dépôt: 93400799.8
(22) Date de dépôt: 29.03.1993
(51) Int. Cl.: F16F 1/36, F16F 3/10, F16F 7/10, F16F 1/30

(54) **Dispositif de filtrage des vibrations et système de fixation d'une charge sur un support comportant une pluralité de tels dispositifs**
Vorrichtung zum Filtern von Schwingungen und Befestigungssystem einer Last auf einem mit einer Vielheit solchen Vorrichtungen
Vibration-filtering device and arrangement for the fixing of a load on a support comprising a multitude of such devices

(30) Priorité: 31.03.1992 FR 9203873
(43) Date de publication de la demande: 20.10.1993
(73) Titulaire: HUTCHINSON, F-75008 Paris (FR)
(72) Inventeur: Simon, Jean-Michel, F-92140 Clamart (FR); Ciolczyk, Jean-Pierre, F-45120 Chalette Sur Loing (FR)
(74) Mandataire: Orès, Bernard

(56) Documents cités:
- EP-A- 132 048
- EP-A- 296 974
- EP-A- 351 738
- NTIS TECH NOTES Septembre 1991, SPRINGFIELD, VA US page 718 'Composite struts would damp vibrations'
- PATENT ABSTRACTS OF JAPAN vol. 9, no. 282 (M-428)(2005) 9 Novembre 1985 & JP-A-60 125 427(NIHON HATSUJIYOU KK) 4 JUILLET 1985

## Description

La présente invention se rapporte principalement à un dispositif de filtrage des vibrations et à un système de fixation d'une charge sur un support comportant une pluralité de tels dispositifs.

Le Brevet EP-0 296 974 au nom de la Demanderesse décrit des supports élastiques à grand débattement pour protéger le matériel électronique des chocs, notamment en cas de collision ou d'explosion. Dans une variante de réalisation décrite dans ce Brevet, le support comporte un bras en élastomère dans lequel est noyée une pluralité de câbles en matériau composite prolongé sur un côté par des moyens de fixation formant un arc de cercle ou d'ellipse comprenant deux ressorts à lame en matériau composite reliés par une couche élastomère. Le bras en élastomère comportant les câbles composites se raccorde au dispositif de fixation formant arc de cercle ou d'ellipse par une zone de transition permettant une variation continue de l'épaisseur et de la largeur. Le bras réalisé en caoutchouc naturel présentant un faible coefficient d'amortissement, est plus épais et moins large que le dispositif de fixation réalisé en un élastomère ayant un coefficient d'amortissement élevé.

Le support élastique du Brevet EP-0 296 974 ne permet pas un filtrage efficace des vibrations, notamment des vibrations dont la fréquence est comprise entre 10 et 800 Hz. Le ressort à lame inférieur est directement solidarisé avec un support de fixation métallique, ce qui favorise la propagation des vibrations.

A aucun moment, ce document ne décrit l'amortissement des vibrations par cisaillement de la couche d'élastomère comprise entre les deux ressorts à lame en matériau composite. Au contraire, l'ensemble constitué par les ressorts à lame et la couche intermédiaire en élastomère est appelé à la colonne 14, ligne 39, "ressort composite de fixation de la matrice". De plus, à la colonne 14, lignes 4 à 6, on suggère la possibilité de la mise en oeuvre d'un dispositif de fixation comportant une couche centrale en matériau composite avec deux couches d'extrémité en élastomère. Dans cette variante de réalisation, on n'aboutit pas au cisaillement nécessaire à l'amortissement des vibrations.

D'autre part, les ressorts à lame ne s'étendent dans le support élastique du Brevet EP-0 296 974 que jusqu'à la zone de transition entre les bras et les moyens de fixation formant un arc de cercle, ce qui n'offre pas les caractéristiques de rigidité et de fréquence des modes propres nécessaires au filtrage des vibrations.

Le Brevet US-A-4 942 075 décrit un ressort comprenant deux lames ovales entre lesquelles est interposée une couche de caoutchouc. Sur la figure 4 de ce Brevet, l'on peut voir un exemple de réalisation dans lequel la couche de caoutchouc ne s'étend pas dans les zones arquées.

EP-A-0 132 048 décrit un ressort à lames parallèles entre elles, entre lesquelles est interposée une couche d'élastomère assurant un amortissement. L'exemple de réalisation de la figure 11 de ce document comporte une couche d'élastomère externe 32 qui ne participe pas à l'amortissement des vibrations.

Le document EP-A-0 351 738 décrit un ressort de forme annulaire composé d'une âme en matériau composite enrobée d'élastomère.

Ces Brevets ne révèlent pas et ne suggèrent pas la mise en oeuvre des forces de cisaillement dans le caoutchouc pour amortir les vibrations.

Au vu de cet art connu, la présente invention a pour but d'offrir un dispositif de filtrage des vibrations particulièrement efficace.

La présente invention a également pour but d'offrir un dispositif de filtrage des vibrations susceptible de travailler dans une large plage de fréquences.

C'est aussi un but de la présente invention d'offrir un dispositif de filtrage des vibrations conservant ses propriétés sous une forte charge.

C'est également un but de la présente invention d'offrir un dispositif compact présentant un faible encombrement.

C'est, enfin, un but de la présente invention d'offrir un système de fixation d'un appareil sur un support, notamment d'une machine tournante de masse importante, assurant un filtrage des vibrations entre la plate-forme et son support.

L'invention a principalement pour objet un dispositif de filtrage des vibrations pour assurer la fixation d'une charge sur un support, comportant successivement :
- une première zone de fixation comportant des moyens de fixation du dispositif sur un support,
- une zone arquée,
- une poutre sensiblement parallèle à la première zone de fixation,
- une seconde zone de fixation comportant des moyens de fixation d'une charge sur le dispositif,
- deux ressorts à lame liés par une couche d'élastomère s'étendant dans la première zone de fixation, la zone arquée, et dans la poutre pour aboutir dans la seconde zone de fixation à proximité des moyens de fixation dont ils sont séparés par une couche d'élastomère, ces ressorts à lame sont séparés dans la première zone de fixation sur un support des moyens de fixation par une couche d'élastomère,
caractérisé en ce que les moyens de fixation d'une charge sur le dispositif comprennent un peigne entre les doigts duquel pénètrent les extrémités des ressorts à lame.

L'invention a également pour objet un dispositif, caractérisé en ce que la seconde zone de fixation comporte des surmoulages en élastomère du premier et du dernier doigts du peigne formé par les extrémités des moyens de fixation.

L'invention a également pour objet un tel dispositif de filtrage des vibrations pour assurer la fixation d'une charge sur un support, caractérisé en ce qu'il comporte une masse fixée sensiblement à la mi-hauteur de la zone arquée pour modifier le comportement dynamique du dispositif.

L'invention a également pour objet un dispositif, caractérisé en ce que la couche liant les ressorts à lame comporte un élastomère à fort coefficient d'amortissement, notamment du butyle, notamment dans la zone arquée.

L'invention a également pour objet un dispositif, caractérisé en ce que les ressorts à lame sont des ressorts en matériau composite.

L'invention a également pour objet un dispositif, caractérisé en ce que la couche liant les ressorts à lame comporte dans la poutre un élastomère ayant un faible coefficient d'amortissement, notamment du caoutchouc naturel.

L'invention a également pour objet un dispositif, caractérisé en ce qu'il comporte une zone de transition entre la zone arquée et la poutre dont l'épaisseur est supérieure à l'épaisseur de la zone arquée du dispositif.

L'invention a également pour objet un dispositif, caractérisé en ce qu'il comporte une zone de transition entre la zone arquée et la poutre dont la largeur est inférieure à la largeur de la zone arquée du dispositif.

L'invention a également pour objet un dispositif, caractérisé en ce qu'il comporte au moins trois ressorts à lame séparés deux à deux par des couches d'élastomère.

L'invention a également pour objet un dispositif, caractérisé en ce que la couche d'élastomère liant dans la première zone de fixation les ressorts au moyen de fixation a sensiblement la forme d'un parallélépipède rectangle.

L'invention a également pour objet un dispositif, caractérisé en ce qu'il a une forme générale en C.

L'invention a également pour objet un système de fixation d'une charge sur un support, notamment d'une machine tournante susceptible d'engendrer des vibrations dans ledit support, caractérisé en ce que la charge est solidarisée avec le support uniquement par une pluralité de dispositifs selon l'invention.

L'invention sera mieux comprise au moyen de la description ci-après et des figures annexées sur lesquelles :
- la figure 1 est une vue en coupe d'un premier exemple de réalisation d'un dispositif de filtrage des vibrations selon la présente invention ;
- la figure 2 est une vue de dessus d'un deuxième exemple de réalisation d'un dispositif de filtrage des vibrations selon la présente invention ;
- la figure 3 est une vue en perspective d'un troisième exemple de réalisation d'un dispositif de filtrage des vibrations selon la présente invention ;
- la figure 4 est une vue en coupe d'un quatrième exemple de réalisation d'un dispositif de filtrage des vibrations selon la présente invention ;
- la figure 5 est un diagramme illustrant les propriétés d'un dispositif de filtrage des vibrations selon la présente invention, selon le type d'élastomère employé ;
- la figure 6 est une vue en perspective très schématique d'un système de fixation d'un appareil sur un support selon la présente invention.

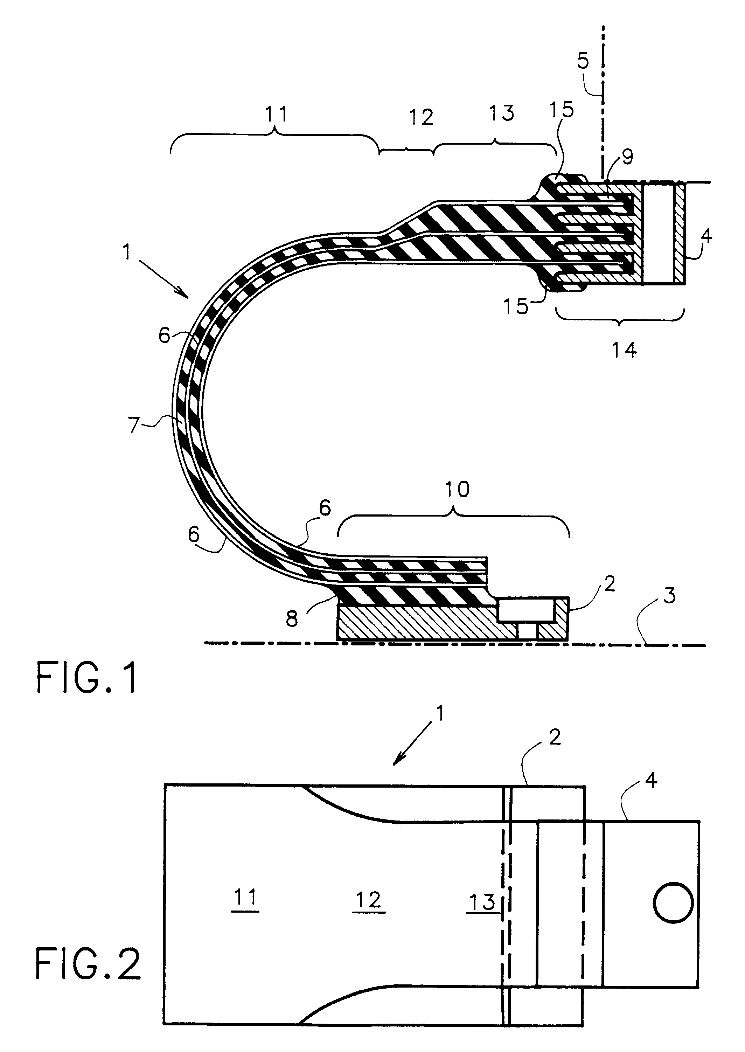

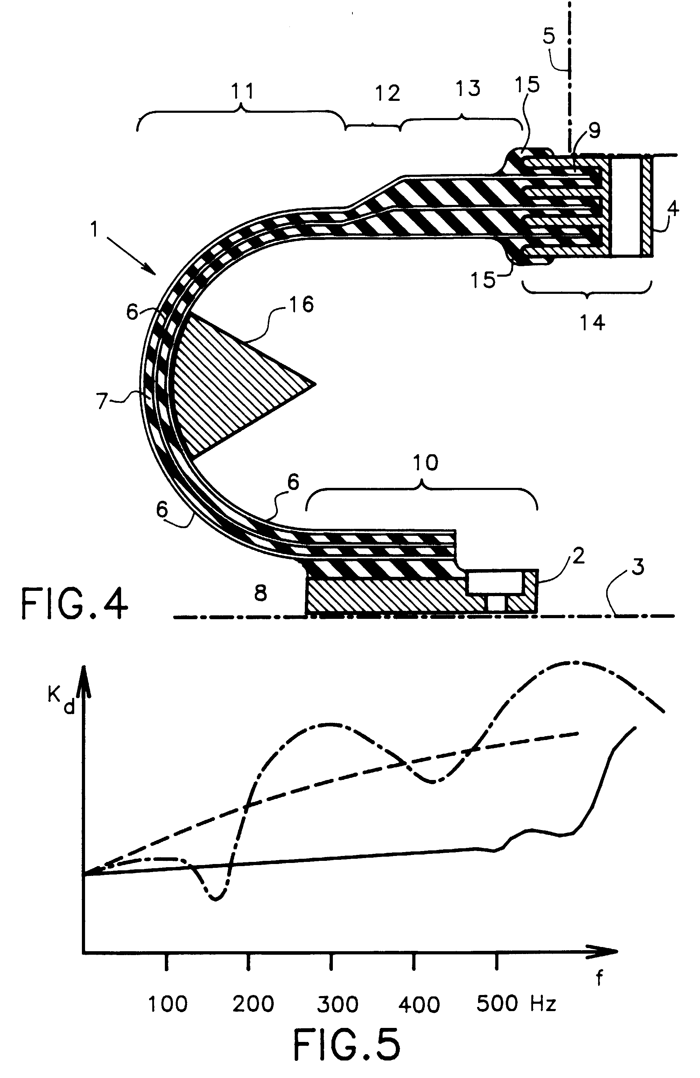

Sur les figures 1 à 6, on a utilisé les mêmes références pour désigner les mêmes éléments.

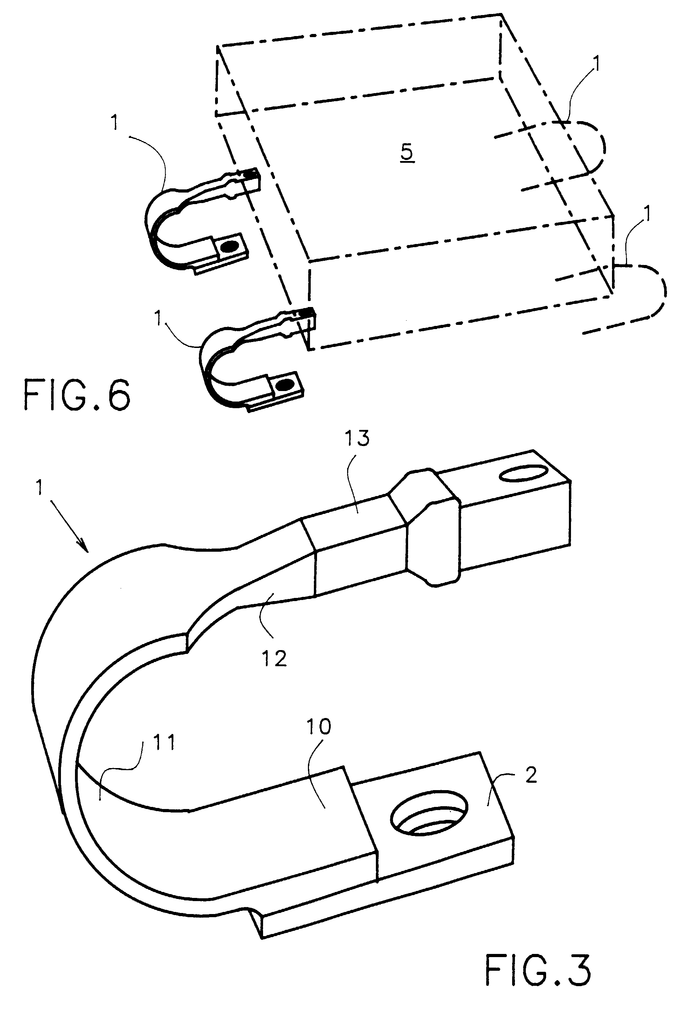

Sur les figures 1 à 3, on peut voir trois exemples de réalisation d'un dispositif de filtrage des vibrations 1, selon l'invention, destinés à supporter trois charges différentes. Comme il sera expliqué plus loin, le dispositif de la figure 3 est destiné à une charge légère, celui de la figure 1 à une charge moyenne, tandis que le dispositif de la figure 2 est destiné à supporter une charge lourde.

Le dispositif 1 de filtrage des vibrations selon l'invention a une forme générale en C aux extrémités desquelles sont fixés des moyens 2 de fixation sur un support 3 et des moyens 4 de fixation d'une charge à supporter 5, notamment des moyens métalliques comportant des ouvertures permettant le passage d'un boulon. Au moins deux ressorts à lame 6, sensiblement parallèles, reliés par une couche d'élastomère 7, s'étendent entre les moyens de fixation 2 et 4 sans être directement solidarisés avec ces moyens de fixation. Il est possible d'utiliser un empilement de ressorts 6 reliés par des couches d'élastomère 7. Par exemple, le dispositif de filtrage des vibrations de la figure 1 comporte trois ressorts reliés par deux couches d'élastomère, celui de la figure 2 comporte quatre ressorts reliés par trois couches d'élastomère, alors que celui de la figure 3 comporte deux ressorts reliés par une couche d'élastomère. Ces ressorts à lame s'étendent avantageusement sur toute la largeur du dispositif selon l'invention et sont séparés des moyens de fixation 2 et 4, respectivement, par une couche d'élastomère 8 et 9. La matrice d'élastomère assure la cohésion du dispositif de filtrage des vibrations selon l'invention. Elle assure simultanément la liaison sans contact direct entre les divers ressorts 6 ainsi qu'entre les ressorts 6 et les moyens de fixation 2 et 4.

Le dispositif de filtrage des vibrations selon l'invention comporte successivement une zone 10 de fixation sur le support 3, une zone 11 arquée, une zone 12 de transition, une poutre 13 sensiblement parallèle à la zone 10 de fixation et une zone 14 de fixation de la charge 5. Avantageusement, les zones de fixation 10 et/ou 14 ont des surfaces de liaison importantes avec les moyens de fixation 2 et/ou 4. Par exemple, le ressort 6 extérieur est relié aux moyens de fixation 2 par une couche 8 d'élastomère ayant sensiblement la forme d'un parallélépipède rectangle. Dans l'exemple de réalisation illustré sur la figure 1, les extrémités des ressorts 6 formant un premier peigne pénètrent entre les doigts d'un peigne formé par les extrémités des moyens de fixation 4. Les doigts des peignes interdigités sont reliés par la couche 9 d'élastomère. Avantageusement, un surmoulage 15 recouvre le premier et le dernier doigts du peigne formé par les extrémités des moyens de fixation 4.

Le dispositif selon l'invention peut être adapté au comportement statique et dynamique désiré.

On détermine tout d'abord la force susceptible d'être exercée par la charge 5. Cette force dépend de la masse de cette charge, de l'accélération subie (accélération de la pesanteur, décélération en cas de choc, etc...) et du nombre de dispositifs de filtrage des vibrations mis en oeuvre. Par exemple, dans le cas où tous les dispositifs mis en oeuvre sont identiques, on divise la force maximale à supporter par le nombre de dispositifs. On utilise pour chaque dispositif de filtrage des vibrations un ensemble de ressorts 6 dont la raideur est suffisante pour supporter une force déterminée. Par exemple, pour des forces importantes, on augmente la largeur et le nombre de ressorts 6 du dispositif de filtrage des vibrations.

Dans l'exemple de la figure 6, une charger 5 dessinée en trait mixte est supportée par quatre dispositifs de filtrage des vibrations 1 selon l'invention (dont 2 symbolisé). Selon le cas, la charge 5 doit être protégée des vibrations ou, au contraire, génère des vibrations dont la propagation dans le support serait gênante. Le choix du nombre et de l'emplacement des dispositifs 1 de filtrage des vibrations dépend notamment de l'espace disponible. Sur l'exemple illustré sur la figure 6, les quatre dispositifs de filtrage des vibrations sont disposés face à face sur deux bords parallèles de la charge 1 supportée. Ces dispositifs peuvent, au contraire, être disposés dans les coins dans le prolongement des médianes d'une charge comportant un fond rectangulaire ou être disposés uniquement sous le fond de la charge 5, sans qu'aucune partie des dispositifs de filtrage des vibrations ne dépasse. Les répartitions irrégulières des dispositifs de filtrage des vibrations sur le fond de la charge 5 peuvent s'avérer plus performantes pour minimiser l'apparition de modes propres du système composé d'une pluralité des dispositifs de filtrage des vibrations et de la charge 5, notamment pour éliminer les oscillations basse fréquence.

Il est bien entendu que l'invention n'est pas limitée à un système dans lequel la charge est placée au-dessus d'un ensemble de dispositifs de filtrage des vibrations. La suspension d'une charge par une pluralité de dispositifs de filtrage des vibrations ne sort pas du cadre de la présente invention.

On prend ensuite en considération la ou les bande(s) de fréquence des vibrations à éliminer. Le filtrage des vibrations est perturbé par les modes propres ou résonances du dispositif de filtrage des vibrations appartenant à la bande de fréquences à filtrer. On détermine les caractéristiques mécaniques du dispositif de filtrage des vibrations selon l'invention et notamment le rapport masse/rigidité des ressorts 6 de façon à éviter ou minimiser l'apparition des modes propres indésirables. Par exemple, pour un filtrage des basses et moyennes fréquences acoustiques, l'on met avantageusement en oeuvre les ressorts à lame 6 en matériau composite du type fibre de verre, de carbone ou d'aramide (par exemple vendu sous la Marque KEVLAR par la Société DU PONT DE NEMOURS) inclus dans une matrice en époxy. De même, il peut s'avérer avantageux de solidariser, par exemple à mi-hauteur de la zone 11 arquée, une masse 16, comme illustré sur la figure 4, modifiant le comportement dynamique du dispositif de filtrage des vibrations selon l'invention. Cette masse, par exemple de section triangulaire, est solidarisée à la zone 11 arquée par une couche d'élastomère.

D'autre part, les comportements statique et dynamique peuvent être améliorés par la mise en oeuvre d'une zone 11 arquée, large et fine et au contraire d'une poutre 13 étroite et épaisse. La zone 12 de transition assure une variation continue de la largeur et de l'épaisseur entre la zone 11 et la poutre 13. Ainsi, il est possible d'ajuster indépendamment la rigidité verticale de la rigidité transversale. Dans l'exemple illustré dans la zone 12 de transition, le ressort 6 inférieur est sensiblement parallèle à la zone 10, le ressort 6 suivant s'éloignant progressivement du ressort 6 inférieur au fur et à mesure que l'on passe de la zone 11 arquée à la poutre 13 dans laquelle tous les ressorts sont parallèles.

Enfin, on choisit le ou les matériau(x), notamment les élastomères, des couches 7 liant les ressorts à lame 6. Ces matériaux doivent travailler en cisaillement lors du déplacement relatif des deux ressorts 6 pour absorber les vibrations.

Sur la figure 5, on a représenté la rigidité K_{d} (en N/mm) en fonction de la fréquence f (en Hz) de trois exemples de réalisation des dispositifs de filtrage des vibrations selon l'invention.

En trait pointillé, on a représenté la rigidité d'un dispositif de filtrage des vibrations dont les couches 7 liant les ressorts 6 sont en un élastomère à coefficient d'amortissement élevé, par exemple du butyle. La rigidité de cette variante de réalisation augmente régulièrement avec la fréquence, ce qui en dégrade les performances en moyennes et hautes fréquences.

En trait mixte, on a représenté la rigidité d'un dispositif de filtrage des vibrations dont les couches 7 reliant les ressorts 6 sont en un élastomère ayant un faible coefficient d'amortissement, par exemple en caoutchouc naturel. La rigidité de cette variante de réalisation est sensiblement constante pour une plage de fréquences allant du statique à 150 Hz, mais présente une première résonance entre 200 et 300 Hz suivie par d'autres résonances à des fréquences supérieures, ce qui limite l'utilisation de cette variante de réalisation au filtrage des fréquences inférieures à 150 Hz.

En trait plein, on a représenté la variante de réalisation préférée d'un dispositif de filtrage des vibrations dont les couches 7 liant les ressorts 6 sont, pour la zone 11 arquée, en un élastomère à haut coefficient d'amortissement, alors qu'au contraire, les couches 7 sont réalisées en caoutchouc naturel ayant un faible coefficient d'amortissement au niveau de la poutre 13. Cette variante de réalisation assure le filtrage des vibrations dans une large plage de fréquences.

Il est bien entendu que le dispositif de filtrage des vibrations assurant en outre une protection contre les chocs ne sort pas du cadre de la présente invention.

L'invention s'applique principalement au confinement du bruit et/ou des vibrations notamment du bruit et des vibrations engendrées par les machines tournantes.

## Revendications

1. Dispositif de filtrage des vibrations pour assurer la fixation d'une charge (5) sur un support (3), comportant successivement :
- une première zone (10) de fixation comportant des moyens (2) de fixation du dispositif (1) sur un support (3),
- une zone (11) arquée,
- une poutre (13) sensiblement parallèle à la première zone (10) de fixation,
- une seconde zone (14) de fixation comportant des moyens (4) de fixation d'une charge (5) sur le dispositif,
- deux ressorts (6) à lame liés par une couche (7) d'élastomère s'étendant dans la première zone (10) de fixation, la zone (11) arquée, et dans la poutre (13) pour aboutir dans la seconde zone (14) de fixation à proximité des moyens (4) de fixation dont ils sont séparés par une couche (9) d'élastomère, ces ressorts (6) à lame sont séparés dans la première zone (10) de fixation sur un support (3) des moyens (2) de fixation par une couche (8) d'élastomère,
caractérisé en ce que les moyens (4) de fixation d'une charge (5) sur le dispositif (1) comprennent un peigne entre les doigts duquel pénètrent les extrémités des ressorts (6) à lame.

2. Dispositif selon la revendication 1, caractérisé en ce que la seconde zone (14) de fixation comporte des surmoulages (15) en élastomère du premier et du dernier doigts du peigne formé par les extrémités des moyens (4) de fixation.

3. Dispositif de filtrage des vibrations pour assurer la fixation d'une charge (5) sur un support (3), selon la revendication 1 ou 2, caractérisé en ce qu'il comporte une masse (16) fixée sensiblement à la mi-hauteur de la zone arquée (11) pour modifier le comportement dynamique du dispositif.

4. Dispositif selon l'une quelconque des revendications précédentes, caractérisé en ce que la couche (7) liant les ressorts à lame (6) comporte un élastomère à fort coefficient d'amortissement, notamment du butyle, notamment dans la zone (11) arquée.

5. Dispositif selon l'une quelconque des revendications précédentes, caractérisé en ce que les ressorts à lame (6) sont des ressorts en matériau composite.

6. Dispositif selon l'une quelconque des revendications précédentes, caractérisé en ce que la couche (7) liant les ressorts (6) à lame comporte dans la poutre (13) un élastomère ayant un faible coefficient d'amortissement, notamment du caoutchouc naturel.

7. Dispositif selon l'une quelconque des revendications précédentes, caractérisé en ce qu'il comporte une zone (12) de transition entre la zone (11) arquée et la poutre (13) dont l'épaisseur est supérieure à l'épaisseur de la zone (11) arquée du dispositif.

8. Dispositif selon l'une quelconque des revendications précédentes, caractérisé en ce qu'il comporte une zone (42) de transition entre la zone (11) arquée et la poutre (13) dont la largeur est inférieure à la largeur de la zone arquée (11) du dispositif.

9. Dispositif selon l'une quelconque des revendications précédentes, caractérisé en ce qu'il comporte au moins trois ressorts (6) à lame séparés deux à deux par des couches (7) d'élastomère.

10. Dispositif selon l'une quelconque des revendications précédentes, caractérisé en ce que la couche (8) d'élastomère liant dans la première zone (10) de fixation les ressorts (6) au moyen de fixation (2) a sensiblement la forme d'un parallélépipède rectangle.

11. Dispositif selon l'une quelconque des revendications précédentes, caractérisé en ce qu'il a une forme générale en C.

12. Système de fixation d'une charge (5) sur un support (3), notamment d'une machine tournante susceptible d'engendrer des vibrations dans ledit support (3), caractérisé en ce que la charge (5) est solidarisée avec le support (3) uniquement par une pluralité de dispositifs (1) selon l'une quelconque des revendications précédentes.

## Patentansprüche

1. Vorrichtung zum Ausfiltern von Vibrationen zur Sicherung der Befestigung einer Last (5) an einer Stützfläche bzw.einem Sockel (3), die nacheinander enthält:
- eine erste Fixierungszone (10) mit Mitteln (2) zur Befestigung der Vorrichtung (1) an der Stützfläche (3),
- eine bogenförmig gekrümmte Zone (11),
- einen zur ersten Fixierungszone (10) im wesentlichen parallelen Träger (13).
- eine zweite Fixierungszone (14) mit Mitteln (4) zur Befestigung einer Last (5) an der Vorrichtung,
- zwei durch eine Elastomerschicht (7) miteinander verbundene Blattfedern (6), die sich über die erste Fixierungszone (10), die bogenförmige Zone (11) und den Träger (13) erstrecken und in die zweite Fixierungszone (14) benachbart zu den Befestigungsmitteln (4) einmünden, von denen sie durch eine Elastomerschicht (9) getrennt sind, während die Blattfedern (6) in der ersten Zone (10) der Fixierung an der Stützfläche (3) von den Befestigungsmitteln (2) durch eine Elastomerschicht (8) getrennt sind,
**dadurch gekennzeichnet,** daß die Mittel (4) zur Befestigung einer Last (5) an der Vorrichtung (1) einen Kamm aufweisen, zwischen dessen Zinken die Enden der Blattfedern (6) eingreifen.

2. Vorrichtung nach Anspruch 1, dadurch gekennzeichnet, daß die zweite Fixierungszone (14) übergreifende Elastomer-Formansätze (15) aufweist für die ersten und letzten Zinken des durch die Enden der Befestigungsmittel (4) gebildeten Kamms.

3. Vorrichtung zum Ausfiltern von Vibrationen zur Sicherung der Befestigung einer Last (5) an einer Stützfläche (3) nach Anspruch 1 oder 2, dadurch gekennzeichnet, daß sie zur Modifizierung des dynamischen Verhaltens der Vorrichtung eine Masse (16) aufweist, die im wesentlichen auf halber Höhe der bogenförmig gekrümmten Zone (11) fixiert ist.

4. Vorrichtung nach einem der vorangehenden Ansprüche, dadurch gekennzeichnet, daß die die Blattfedern (6) verbindende Schicht (7) ein Elastomer, insbesondere Butyl, mit starkem Dämpfungswert insbesondere in der bogenförmig gekrümmten Zone (11) aufweist.

5. Vorrichtung nach einem der vorangehenden Ansprüche, dadurch gekennzeichnet, daß die Blattfedern (6) Federn aus Verbundmaterial sind.

6. Vorrichtung nach einem der vorangehenden Ansprüche, dadurch gekennzeichnet, daß die die Blattfedern (6) verbindende Schicht (7) innerhalb des Trägers (13) ein Elastomeres mit geringem Dämpfungswert, insbesondere Naturkautschuk, aufweist.

7. Vorrichtung nach einem der vorangehenden Ansprüche, dadurch gekennzeichnet, daß sie eine Übergangszone (12) zwischen der bogenförmigen Zone (11) und dem Träger (13) aufweist, dessen Dicke größer ist als die Dicke der bogenförmigen Zone (11) der Vorrichtung.

8. Vorrichtung nach einem der vorangehenden Ansprüche, dadurch gekennzeichnet, daß sie eine Übergangszone (42) zwischen der bogenförmigen Zone (11) und dem Träger (13) aufweist, dessen Breite geringer ist als die Breite der bogenförmigen Zone (11) der Vorrichtung.

9. Vorrichtung nach einem der vorangehenden Ansprüche, dadurch gekennzeichnet, daß sie zumindest drei Blattfedern (6) aufweist, die jeweils paarweise durch Elastomerschichten (7) voneinander getrennt sind.

10. Vorrichtung nach einem der vorangehenden Ansprüche, dadurch gekennzeichnet, daß die die Federn (6) mit dem Befestigungsmittel (2) in der ersten Fixierungszone (10) verbindende Elastomerschicht (8) im wesentlichen die Form eines parallelepipedischen Rechtecks hat.

11. Vorrichtung nach einem der vorangehenden Ansprüche, dadurch gekennzeichnet, daß sie allgemein C-förmig ist.

12. System zur Fixierung einer Last (5) an einer Stützfläche (3), insbesondere einer drehbewegten Maschine, die geeignet ist, Vibrationen in der Stützfläche (3) herbeizuführen, dadurch gekennzeichnet, daß die Last (5) mit der Stützfläche (3) ausschließlich durch eine Mehrzahl von Vorrichtungen (1) nach einem der vorangehenden Ansprüche vereinigt ist.

## Claims

1. A device for filtering vibrations, to provide for fixing a load (5) on a support (3) and comprising, in sequence:
- a first fixing zone (10) comprising means (2) for fixing the device (1) on a support (3),
- an arcuate zone (11),
- a beam (13) substantially parallel with the first fixing zone (10),
- a second fixing zone (14) comprising means (4) for fixing a load (5) on the device,
- two leaf springs (6) connected by a layer (7) of elastomer extending into the first fixing zone (10), the arcuate zone (11) and into the beam (13) to terminate in the second fixing zone (14) close to the fixing means (4) from which they are separated by a layer (9) of elastomer, the said leaf springs (6), in the first zone (10) for fixing on a support (3), being separated from the fixing means (2) by a layer (8) of elastomer,
characterised in that the means (4) for fixing a load (5) on the device (1) comprise a comb between the teeth of which the ends of the leaf springs (6) penetrate.

2. A device according to claim 1, characterised in that the second fixing zone (14) comprises elastomer overmouldings (15) on the first and second teeth of the comb formed by the ends of the fixing means (4).

3. A vibration filtering device to provide for fixing a load (5) on a support (3), according to claim 1 or 2, characterised in that it comprises a mass (16) fixed substantially half way up the arcuate zone (11) to modify the dynamic behaviour of the device.

4. A device according to any one of the preceding claims, characterised in that the layer (7) connecting the leaf springs (6) comprises an elastomer with a high shock-absorption coefficient, particularly butyl and particularly in the arcuate zone (11).

5. A device according to any one of the preceding claims, characterised in that the leaf springs (6) are springs of a composite material.

6. A device according to any one of the preceding claims, characterised in that the layer (7) connecting the leaf springs (6) comprises in the beam (13) an elastomer with a low shock-absorption coefficient, particularly natural rubber.

7. A device according to any one of the preceding claims, characterised in that it comprises a transition zone (12) between the arcuate zone (11) and the beam (13) and the thickness of which is greater than the thickness of the arcuate zone (11) of the device.

8. A device according to any one of the preceding claims, characterised in that it comprises a transition zone (42) between the arcuate zone (11) and the beam (13) and the width of which is less than the width of the arcuate zone (11) of the device.

9. A device according to any one of the preceding claims, characterised in that it comprises at least three leaf springs (6) separated in pairs by elastomer layers (7).

10. A device according to any one of the preceding claims, characterised in that the elastomer layer (8) which in the first fixing zone (10) connects the springs (6) by fixing means (2) is substantially in the form of a right-angled parallelepiped.

11. A device according to any one of the preceding claims, characterised in that it is generally C-shaped.

12. A system for fixing a load (5) on a support (3), particularly for fixing a rotating machine capable of generating vibrations in the said support (3), characterised in that the load (5) is fixed to the support (3) solely by a plurality of devices (1) according to any one of the preceding claims.
